## Europäisches Patentamt

## European Patent Office

## Office européen des brevets

(19)

(11) Veröffentlichungsnummer: **0 115 755 B1**

(12)

# EUROPÄISCHE PATENTSCHRIFT

(45) Veröffentlichungstag der Patentschrift:
30.04.86

(21) Anmeldenummer: 83890016.5

(22) Anmeldetag: 04.02.83

(51) Int. Cl.⁴: **B 23 B 1/00**

(54) Verfahren zum Drehen von Ringnuten.

(43) Veröffentlichungstag der Anmeldung:
**15.08.84 Patentblatt 84/33**

(45) Bekanntmachung des Hinweises auf die Patenterteilung:
**30.04.86 Patentblatt 86/18**

(84) Benannte Vertragsstaaten:
**AT DE GB IT**

(56) Entgegenhaltungen:
**DE - A - 465 139**
**FR - A - 482 811**
**FR - A - 894 679**
**GB - A - 758 075**
**US - A - 3 614 250**

**WERKSTATT UND BETRIEB, Band 114, Nr. 2, 1981, Seite 107 U. PIRANI: "Sonderausführungen von Nuten-Einstechgeräten"**

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Kirchberger, Peter, Dipl.-Ing., Schulgasse 3, A-3350 Haag (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum Drehen von Ringnuten, insbesondere für eine Hinterstichbearbeitung, bei dem ein Drehwerkzeug relativ zum Werkstück in einer kreisförmigen Schnittbewegung um die Achse der Ringnut umläuft und in Abhängigkeit vom Ringnutquerschnitt einer Vorschubbewegung unterworfen wird.

Um Ringnuten beispielsweise zum Freistellen der Übergänge zwischen Zylinder- und Wangenflächen von Kurbelwellen herzustellen, werden bisher entweder Schäl verfahren oder Kopierdrehverfahren angewendet, wobei ein Schälen mittels Formstahl sehr ungünstige Spanbildungs- und Spanablaufverhältnisse mit sich bringt, lediglich den Einsatz von Schnellstahl für das Werkzeug erlaubt und geringe Schnittgeschwindigkeiten bzw. hohe Bearbeitungszeiten erfordert. Ein Kopierdrehen wiederum, bei dem einem Drehstahl, dem gewünschten Ringnutquerschnitt entsprechend, eine in einer Ebenr durch die Ringnutachse bzw. Werkstückachse liegende Vorschubbewegung erteilt wird, führt leicht zu einem Wirrspan mit komplizierter Späneabfuhr und der Gefahr einer Störung des automatischen Bearbeitungsablaufes. Außerdem verlangt das Kopierdrehen zum Aufbringen der Schnittbewegung ein sich drehendes Werkstück, wodurch wegen der auftretenden Unwuchten, des Werkstückantriebes u.dgl. weitere Nachteile in Kauf zu nehmen sind.

Der Erfindung liegt daher die Aufgabe zugrunde, ein Verfahren der eingangs geschilderten Art anzugeben, das ein Drehen bester Bearbeitungsqualität mit hohen Schnittgeschwindigkeiten und ohne Gefahr einer Wirrspanbildung u.dgl. gewährleistet und außerdem den rationellen Einsatz einfacher hartmetallbestückter Drehwerkzeuge erlaubt.

Die Erfindung löst diese Aufgabe dadurch, daß das Werkstück in an sich bekannter Weise stillgehalten und das kreisende Drehwerkzeug mit dem Mittelpunkt seiner kreisförmigen Schnittbewegung in einer ebenfalls kreisförmigen Vorschubbewegung um die Achse der Ringnut herumgeführt wird. Diese Schnitt- und Vorschubbewegung setzen sich zu einer umlaufenden schlingenförmigen Wirkbewegung (Zykloide) des Drehwerkzeuges zusammen, deren äußere und innere Einhüllende die Ringnut entstehen lassen. Dabei wird bei dieser schlingenförmigen Wirkbewegung die bereits beim Einstechen und beim ersten Umlauf gefertigte Nut fortschreitend einmal im Bereich des Außenumfanges, einmal diametral gegenüber im Bereich des Innenumfanges weiterbearbeitet, bis der Kreis der Vorschubbewegung geschlossen und ein entlang des Umfanges gleichbleibend breiter Ring hergestellt ist, welche Breite somit vom Kreisdurchmesser der Vorschubbewegung und von der Schnittbreite des Werkzeuges selbst bestimmt wird. Durch das fortschreitend zwischen äußerem und innerem Umfangsbereich wechselnde Schneiden der Nut fallen auch nur kurze Späne an, denen jede Neigung zur Wirrspanbildung fehlt und die eine vollkommen problemlose Späneabfuhr sicherstellen. Es kann ohne jede Schwierigkeit ein Drehwerkzeug mit einem Hartmetall-Schneidplättchen verwendet werden, das eine große Schnittgeschwindigkeit erlaubt und, begünstigt durch das Schneiden einmal an der Außenseite, einmal an der Innenseite, eine hohe Standzeit mit sich bringt. Da das Werkstück stillgehalten wird und das Drehwerkzeug Schnitt- und Vorschubbewegung ausübt, werden die Nachteile eines drehenden Werkstückes von vornherein ausgeschaltet und die aus der Schnitt- und Vorschubbewegung zusammengesetzte Wirkbewegung des Drehwerkzeuges kann optimal auf die gewünschte Bearbeitungsqualität abgestimmt werden.

Wird erfindungsgemäß die Ringnut in axial aufeinanderfolgenden Schritten gedreht, wobei die Durchmesser der Vorschubbewegungen in Anpassung an einen bestimmten Ringnutquerschnitt verändert werden, läßt sich eine Ringnut mit schrittweise geänderter Breite herstellen, was auf einfache Weise die Annäherung des Nutenquerschnittes an eine gewünschte Form, beispielsweise einen Kreisbogen, erlaubt. Außerdem kann durch die einzelnen Schritte die Schnittiefe unabhängig von der Nutentiefe gewählt werden.

Das Werkzeug wird zum Ansetzen mit dem Mittelpunkt seiner kreisförmigen Schnittbewegung entlang der Achse der herzustellenden Ringnut an die Werkstückoberfläche herangeführt. Zum Drehen der Ringnut muß nun das Werkzeug bis zur gewünschten Schnittiefe in das Werkstück eingestochen werden, was, wie üblich, bei gleichzeitiger Schnittbewegung rein axial erfolgen kann. Ist die Schnittiefe erreicht, wird das Werkzeug mit dem Mittelpunkt seiner Schnittbewegung radial von der Achse der Ringnut weg bis zur vorgesehenen Kreisbahn der Vorschubbewegung geführt, bevor der Kreisvor schub beginnt. Wird nun erfindungsgemäß das Drehwerkzeug beim Einstechen mit dem Mittelpunkt seiner kreisförmigen Schnittbewegung entlang einer Resultierenden geführt, die sich aus einer von der Schnittiefe abhängigen axialen und einer vom Durchmesser der jeweils anschließenden Vorschubbewegung abhängigen radialen Bewegungskomponente zusammensetzt, lassen sich die Einstichbewegung und die Bewegung zum Erreichen der Vorschubbahn miteinander kombinieren, so daß sich eine Verkürzung der Bearbeitungszeit und wegen der sofort an den Einstich anschließenden schlingenförmigen Wirkbewegung des Werkzeuges auch bei Drehbeginn günstigere Spanbildungsverhältnisse ergeben. Wird die Ringnut in mehreren Schritten gedreht, kann die Einstichbewegung von einem Schritt zum anderen in ähnlicher Weise vorgenommen werden, wodurch die Resultierenden der Einstichbewegungen aller Schritte gewissermaßen eine Zick-Zack-Linie bilden und die Schritte fließend ineinander übergehen.

In einer vorteilhaften Ausgestaltung der Erfindung ist es auch möglich, daß der kreisförmigen Vorschubbewegung des Drehwerkzeuges vorzugsweise unter gleichzeitiger Änderung deren Durchmessers eine axiale Vorschub-Zusatzbewegung überlagert wird. Dadurch kommt es zu einer schlingenförmigen Wirkbewegung des Werkzeuges, die nicht entlang eines Kreises, sondern entlang einer Schraubenlinie mit veränderlichem Windungsdurchmesser fortschreitet, und es können beim Drehen von Ringnuten. auch ohne Unterteilung des Drehvorganges in einzelne Schritte bestimmte Querschnittsformen erzeugt werden.

In der Zeichnung ist der Erfindungsgegenstand rein schematisch dargestellt, und zwar zeigen

Fig. 1 bis 3 drei Phasen des erfindungsgemäßen Verfahrens und

Fig. 4 das Arbeitsprinzip eines schrittweisen Drehens einer Ringnut nach dem erfindungsgemäßen Verfahren.

Um ohne Gefahr einer störenden Wirrspanbildung mit einem Drehwerkzeug 1, beispielsweise einer Hartmetall-Schneidplatte eine Ringnut 2 rationell drehen zu können, wird ein Verfahren angewendet, bei dem das Werkstück 3 stillsteht und das Drehwerkzeug 1 allein die Schnittbewegung und die Vorschubbewegung ausübt. Die Schnittbewegung S des Drehwerkzeuges ist kreisförmig und der Vorschub V besteht aus einer Werkzeugbewegung, die den Mittelpunkt M der Schnittbewegung S zusätzlich im Kreis um die Achse A der Ringnut 2 herumführt.

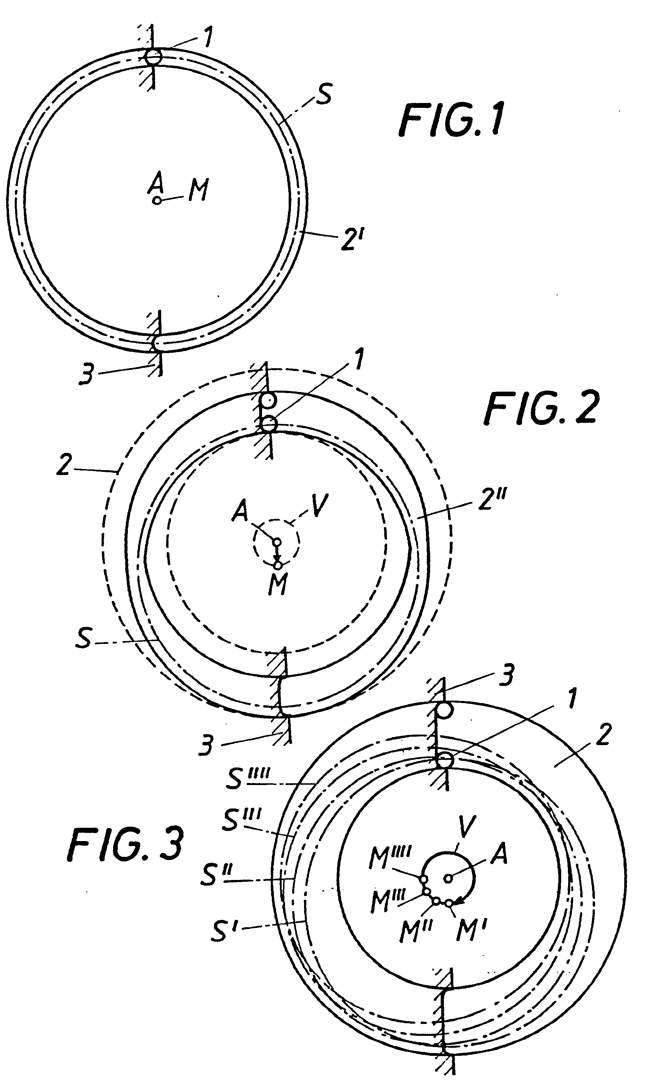

Wie in den Fig. 1 bis 3 veranschaulicht, wird zum Drehen der Ringnut 2 das Drehwerkzeug 1 angesetzt und eingestochen, wozu das Werkzeug 1 mit dem Mittelpunkt M seiner Schnittbewegung der Achse A der Ringnut 2 entlanggeführt wird. Nach dem ersten Umlauf entsteht daher eine der reinen Schnittbewegung S entsprechende, zur Achse A koaxiale Ringnut 2' mit einer vom Drehwerkzeug bestimmten Breite (Fig. 1). Nun wird das kreisende Drehwerkzeug 1 radial aus der Achse A herausgefahren, bis der Mittelpunkt M den Durchmesser der gewünschten kreisförmigen Vorschubbewegung V erreicht hat (Fig. 2). Dadurch wird die Ringnut 2' exzentrisch auf das Maß des äußeren und inneren Umfanges der zu fertigenden Ringnut 2 aus geweitet, welche ausgeweitete Nut 2'' dann fortschreitend und umlaufend bis zur Fertigstellung der gewünschten Nut 2 weiter vergrößert wird, indem durch die Vorschubbewegung V der Mittelpunkt M der Drehwerkzeug-Schnittbewegung kreisförmig um die Achse A der Ringnut 2 herumgeführt wird (Fig. 3). Wie mit den einzelnen Positionen M', M'', M''', M'''' des Mittelpunktes und der zugehörigen Schnittbewegungen S', S'' S''' S'''' angedeutet, wird während des Umlaufes dieses Mittelpunktes M die Ringnut 2 fertigbearbeitet, wobei es abwechselnd zu einem Schnitt an der Außen- und Innenseiteder Nut kommt, was relativ kurze Späne enstehen läßt eine geringe Werkzeugbelastung mit sich bringt.

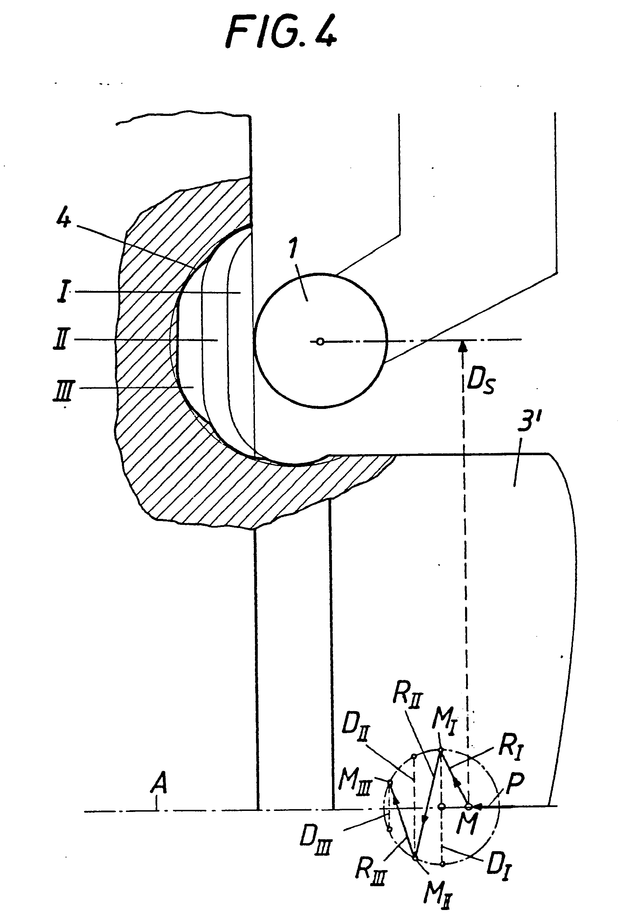

In Fig.4 ist das Freistellen des Überganges zwischen einer Zylinder- und einer Stirn- bzw. Wangenfläche einer Kurbelwelle 3' durch eine Ringnut 4 mit einem Kreisbogen angenähertem Querschnitt veranschaulicht. Diese Ringnut 4 wird dazu in drei Schritten I, II, III gedreht, wobei der Durchmesser $D_I$, $D_{II}$, $D_{III}$ der Vorschubbewegung der einzelnen Schritte immer kleiner wird. Das Ansetzen des Schneidwerkzeuges 1 erfolgt mit einer rein axialen Bewegung, d.h. der Mittelpunkt M des Schnittkreises mit dem Durschmesser $D_S$ wandert geradlinig auf der Achse A der Kurbelwelle 3' bzw. der Ringnut 4 (Pfeil P). Zum Einstechen allerdings wird dann der Mittelpunkt M entlang einer Resultierenden $R_I$ bewegt, die sich aus einer von der Schnittiefe abhängigen Axialkomponente und einer vom Durchmesser $D_I$ der Vorschubbewegung abhängigen Radialkomponente zusammensetzt, so daß nach dem Einstechen der Mittelpunkt in der Position $M_I$ bereits auf der Kreisbahn für die Vorschubbewegung des ersten Schrittes I liegt. Das drehen dieses ersten Schrittes I erfolgt nun, wie in Fig. 2 und 3 angedeutet, indem das Drehwerkzeug 1 einer kreisförmigen Vorschubbewegung unterworfen wird, bei der $M_I$ einen Kreis mit dem Radius $D_I$ um die Achse A beschreibt. Nach dem Fertigdrehen dieses Schrittes I folgt sofort anschließend das Drehen des Schrittes II, wozu das Werkzeug 1 mit dem Mittelpunkt seiner Schneidbewegung von der mit der Anfangsposition indenten Endposition $M_I$ des ersten Schrittes I entlang der Resultierenden $R_{II}$, bei der wiederum die Schnittiefe und der Durchmesser $D_{II}$ der Vorschubbewegung für den zweiten Schritt II berücksichtigt ist, zur Position $M_{II}$ eingestochen wird. Auch zum Drehen des Schrittes II läuft der Mittelpunkt der Schnittbewegung um die Achse A entlang eines Kreises um, der aber einen kleineren Durchmesser $D_{II}$ aufweist. Für das Drehen des dritten Schrittes III erfolgen dann die Einstichbewegung nach der Resultierenden $R_{III}$ von der Position $M_{II}$ zur Position $M_{III}$ und das anschließende Drehen mit einer Vorschubbewegung entlang eines Kreises mit dem weiter verkleinerten Durchmesser $D_{III}$. Nach dem Fertigdrehen dieses dritten Schrittes - es können selbstverständlich beliebig viele Schritte gewählt werden - wird das Drehwerkzeug 1 mit dem Mittelpunkt seiner Schnittbewegung radial wieder zur Achse A zurückgebracht und axial ausgefahren. Das Ergebnis dieser dreischrittigen Bearbeitung ist eine Ringnut 4 mit einem Kreisbogen angenähertem Querschnitt, wobei günstigste Spanbildungs- und -abfuhrverhältnisse gewährleistet sind und ein hartmetallbestücktes Drehwerkzeug eingesetzt werden kann.

**Patentansprüche**

1. Verfahren zum Drehen von Ringnuten (2), insbesondere für eine Hinterstichbearbeitung, bei dem ein Drehwerkzeug (1) relativ zum Werkstück (3) in einer kreisförmigen Schnittbewegung um die Achse (A) der Ringnut (2) umläuft und in Abhängigkeit vom Ringnutquerschnitt einer Vorschubbewegung (V) unterworfen wird, dadurch gekennzeichnet, daß das Werkstück (3) in an sich bekannter Weise stillgehalten und das kreisende Drehwerkzeug (1) mit dem Mittelpunkt (M) seiner kreisförmigen Schnittbewegung (S) in einer ebenfalls kreisförmigen Vorschubbewegung (V) um die Achse (A) der Ringnut (2; 4) herumgeführt wird.

2. Verfahren nach Anspruch 1, dadurch gekennzeichnet, daß die Ringnut (4) in axial aufeinanderfolgenden Schritten (I, II, III) gedreht wird, wobei die Durchmesser ($D_I$, $D_{II}$, $D_{III}$) der Vorschubbewegungen in Anpassung an einen bestimmten Ringnutquerschnitt verändert werden.

3. Verfahren nach Anspruch 1 oder 2, dadurch gekennzeichnet, daß das Drehwerkzeug (1) beim Einstechen mit dem Mittelpunkt (M) seiner kreisförmigen Schnittbewegung (S) entlang einer Resultierenden ($R_I$, $R_{II}$, $R_{III}$) geführt wird, die sich aus einer von der Schnittiefe abhängigen axialen und einer vom Durchmesser ($D_I$, $D_{II}$, $D_{III}$) der jeweils anschließenden Vorschubbewegung abhängigen radialen Bewegungskomponente zusammensetzt.

4. Verfahren nach Anspruch 1, dadurch gekennzeichnet, daß der kreisförmigen Vorschubbewegung des Drehwerkzeuges vorzugsweise unter gleichzeitiger Änderung deren Durchmessers eine axiale Vorschub-Zusatzbewegung überlagert wird.

**Claims**

1. A process of turning annular grooves (2), particularly for undercutting, wherein a turning tool (1) rotates relative to the workpiece (3) about the axis (A) of the annular groove (2) in a circular cutting motion and is subjected to a feed movement (V) in dependence on the cross-section of the annular groove, characterized in that the workpiece (3) is held stationary in a manner known per se and the center (M) of the circular cutting movement (S) of the gyrating turning tool (1) is moved around the axis (A) of the annular groove (2; 4) in an also circular feed movement (V).

2. A process according to claim 1, characterized in that the annular groove (4) is turned in axially consecutive steps (I, II, III), and the diameters ($D_I$, $D_{II}$, $D_{III}$) of the feed movements are changed in adaptation to a certain cross-section of the annular groove.

3. A process according to claim 1 or 2, characterized in that for infeeding the center (M) of the circular cutting movement (S) of the turning tool (1) is guided along a resultant ($R_I$, $R_{II}$, $R_{III}$), which is composed of an axial component of motion that depends on the depth of cut and a radial component of motion that depends on the diameter ($D_I$, $D_{II}$, $D_{III}$) of the next following feed movement.

4. A process sccording to claim 1, characterized in that an axial additional feed movement is superimposed on the circular feed movement of the turning tool and the diameter of the latter movement is preferably changed at the same time.

**Revendications**

1. Procédé pour le tournage de rainures annulaires (2), en particulier pour un usinage par dépouille, dans lequel un outil de tournage (1) tourne relativement à la pièce à usiner (3) en un mouvement circulaire de coupe autour de l'axe (A) de la rainure annulaire (2) et est soumis, en fonction de la section de la rainure annulaire, à un mouvement d'avance (V), caractérisé par le fait que, de manière en elle-même connue, on maintient immobile la pièce (3) à usiner et que l'on fait passer l'outil de tournage rotatif (1), par le centre (M) de son mouvement circulaire de coupe (S), en un mouvement d'avance également circulaire (V) autour de l'axe (A) de la rainure annulaire (2; 4).

2. Procédé selon la revendication 1, caractérisé par le fait que l'on tourne la rainure annulaire (4) en des étapes (I, II, III) se succédant axialement, en modifiant les diamètres ($D_I$, $D_{II}$, $D_{III}$) des mouvements d'avance pour les adapter à une section determinée de la rainure annulaire.

3. Procédé selon la revendication 1 ou 2, caractérisé par le fait que lors de la plongée, on guide l'outil de tournage (1), par le centre (M) de son mouvement circulaire de coupe (3), le long d'une resultante ($R_I$, $R_{II}$, $R_{III}$) qui se compose d'une composante de mouvement axiale dépendant de la profondeur de coupe et d'une composante de mouvement radiale dépendant du diamètre ($D_I$, $D_{II}$, $D_{III}$) du mouvement d'avance qui fait chaque fois suite.

4. Procédé selon la revendication 1, caractérisé par le fait qu'au mouvement circulaire d'avance de l'outil de tournage, on superpose, de préférence avec variation simultanée de son diamètre, un mouvement supplémentaire d'avance axiale.

FIG.1

FIG.2

FIG.3

# FIG. 4